# EUROPÄISCHE PATENTSCHRIFT

(11) **EP 2 593 982 B1**
(45) Veröffentlichungstag und Bekanntmachung des Hinweises auf die Patenterteilung: **23.09.2020**
(21) Anmeldenummer: 11721488.2
(22) Anmeldetag: 17.05.2011
(51) Int. Cl.: H01M 2/10, H01M 10/0525, H01M 2/02, B60L 50/64

(54) **BATTERIEZELLENMODUL, BATTERIE UND KRAFTFAHRZEUG**
BATTERY CELL MODULE, BATTERY, AND MOTOR VEHICLE
MODULE D'ÉLÉMENTS DE BATTERIE, BATTERIE ET VÉHICULE À MOTEUR

(30) Priorität: 16.07.2010 DE 102010031462
(43) Veröffentlichungstag der Anmeldung: 22.05.2013
(73) Patentinhaber: Robert Bosch GmbH, 70442 Stuttgart (DE); Samsung SDI Co., Ltd., Yongin-si, Gyeonggi-do 446-577 (KR)
(72) Erfinder: ANGERBAUER, Ralf, 71696 Möglingen (DE); BUBECK, Conrad, 73728 Esslingen (DE)
(74) Vertreter: Bee, Joachim
(86) Internationale Anmeldenummer: PCT/EP2011/057915
(87) Internationale Veröffentlichungsnummer: WO 2012/007205

(56) Entgegenhaltungen:
- EP-A1- 1 523 058
- EP-A1- 1 770 802
- WO-A1-2009/074421
- DE-B- 1 158 137
- US-A- 1 823 066
- US-A1- 2007 051 663

## Beschreibung

Die vorliegende Erfindung betrifft ein Batteriezellenmodul, welches eine Mehrzahl von Batteriezellen umfasst, die in einem Paket angeordnet sind und jeweils ein im Wesentlichen prismatisches Zellengehäuse aufweisen, wobei ein jeweiliges Zellengehäuse die drei Maße Gehäusehöhe, Gehäusebreite und Gehäusetiefe aufweist.

Außerdem betrifft die vorliegende Erfindung eine Batterie, welche wenigstens ein erfindungsgemäßes Batteriezellenmodul umfasst.

Ergänzt wird die vorliegende Erfindung durch ein Kraftfahrzeug, welches wenigstens eine erfindungsgemäße Batterie aufweist.

### Stand der Technik

Eine Batterie, die eine oder mehrere galvanische Batteriezellen umfasst, dient als elektrochemischer Energiespeicher und Energiewandler. Bei der Entladung der Batterie beziehungsweise der jeweiligen Batteriezelle wird in der Batterie gespeicherte chemische Energie durch eine elektrochemische Redoxreaktion in elektrische Energie umgewandelt. Diese elektrische Energie kann je nach Bedarf von einem Nutzer angefordert werden.

Insbesondere in Hybrid- und Elektrofahrzeugen werden in so genannten Batterie-Packs Lithium-Ionen-Batterien oder Nickel-Metallhydrid-Batterien eingesetzt, die aus einer großen Anzahl in Serie geschalteter elektrochemischer Zellen bestehen. Üblicherweise dient dabei ein Batteriemanagementsystem inklusive einer Batteriezustandserkennung der Sicherheitsüberwachung und zur Gewährleistung einer möglichst hohen Lebensdauer.

Bei der Lithium-Ionen-Speichertechnologie wird eine Vielzahl von einzelnen Batteriezellen zu einer gesamten Batterie zusammengeschlossen. Jede Einzelzelle weist dabei ein Gehäuse auf, um die aktiven Batteriezellenkomponenten und den Elektrolyt zu umschließen. Aus dem Batteriezellengehäuse ragen lediglich die elektrischen Anschlüsse beziehungsweise Pole der Batteriezelle.

Aus der DE 690 22 892 T2 ist ein modulares Batterieeinbausystem bekannt, das aus mehreren einzelnen Moduleinheiten besteht. Derartige einzelne Moduleinheiten können Batteriezellen sein. Diese Grundbaueinheiten können nach dem Baukastenprinzip ein Batterieaggregat nahezu beliebiger Größe ausbilden.

In der DE 10 2007 052 375 A1 ist ein Energiespeicher mit effektiver Kühlung sowie ein Verfahren zur kostengünstigen Herstellung dieses Energiespeichers beschrieben, welches eine Herstellung des Energiespeichers gemäß unterschiedlicher Kundenwünsche ermöglicht. Auch in der in der DE 10 2007 052 375 A1 beschriebenen Ausführungsform wird eine kompakte und kostengünstige modulare Bauweise erreicht, die im Rahmen eines Baukastensystems einsetzbar ist. Es können auch hier wieder nahezu beliebig viele Zellen zu Modulen zusammengeschaltet werden. Weitere Batteriezellmodule werden in der EP 1 523 058 A1 sowie in der EP 1 770 802 A1 beschrieben.

Insgesamt ist es also bekannt, dass zum gleichen Einsatzzweck konzipierte beziehungsweise gleichartige Batteriezellen zu Modulen zusammengefasst werden. Dabei wird jedoch nicht unterschiedlichen Typen von Batteriezellen beziehungsweise Batteriezellen unterschiedlicher Anwendungszwecke Rechnung getragen. Es sind zum Beispiel die in unterschiedlichen Typen von Elektro-Fahrzeugen eingesetzten Batterien in ihren konstruktiven Ausgestaltungen und in ihren Außenmaßen relativ unterschiedlich. Dies ist einerseits durch unterschiedliche Leistungsanforderungen und andererseits durch unterschiedliche zur Verfügung stehende Bauraumverhältnisse beziehungsweise Anordnungspositionen bedingt. Außerdem weisen die unterschiedlichen Batteriezellen beziehungsweise Batterien voneinander abweichende Anschlüsse auf, wie zum Beispiel unterschiedliche Gewindegrößen. Diese Unterschiede der Batterien beziehungsweise Batteriezellen gestalten deren Transport, Lagerung sowie Handhabung und Montage relativ aufwendig. Zudem müssen Zuführ-, Positionierungs-, Fixierungs-, Wartungs-, Temperierungs- und Handhabungssysteme relativ komplex ausgestaltet sein, um sie für die unterschiedlichen Batteriezellenbeziehungsweise Batterietypen einsetzen zu können.

### Offenbarung der Erfindung

Es wird ein Batteriezellenmodul nach Anspruch 1 zu Verfügung gestellt. Dabei umfasst das Batteriezellenmodul eine Mehrzahl von Batteriezellen, insbesondere Lithium-Ionen-Batteriezellen, die in einem Paket angeordnet sind und jeweils ein im Wesentlichen prismatisches Zellengehäuse aufweisen, wobei ein jeweiliges Zellengehäuse die drei Maße Gehäusehöhe, Gehäusebreite und Gehäusetiefe aufweist. Erfindungsgemäß sind zwei der Maße bei allen Batteriezellen des Batteriezellenmoduls im Wesentlichen gleich ausgestaltet und das dritte Maß ist wenigstens bei zwei Batteriezellen des Batteriezellenmoduls unterschiedlich ausgestaltet.

Das heißt, dass die Größe des dritten Maßes von Batteriezelle zu Batteriezelle variieren kann, wobei die Größen des ersten und zweiten Maßes bei jeder Batteriezelle gleich sind.

Dabei ist die Erfindung nicht auf Lithium-Ionen-Batteriezellen eingeschränkt, sondern es können alternativ andere Batteriezellen erfindungsgemäß gestaltet und angeordnet werden, wie zum Beispiel auch Nickel-Metallhydrid-Batteriezellen.

Ausgehend von einer auf einer Grundfläche aufzustellenden prismatischen Batteriezelle ist deren Gehäusehöhe der Abstand von der Grundfläche bis zu einer das Batteriezellengehäuse an der obersten Kante abschließenden Deckfläche. Die Gehäusebreite entspricht der Länge einer Kante der Grundfläche und verläuft senkrecht zur Gehäusehöhe. Die Gehäusetiefe verläuft senkrecht zur Gehäusehöhe und zur Gehäusebreite und verläuft bei einer prismatischen Batteriezelle mit rechteckiger Grundfläche entsprechend der Länge einer zweiten Kante der Grundfläche, die senkrecht zur ersten Kante der Grundfläche verläuft.

Bei Abstufungen im Gehäuse, zum Beispiel in der Gehäusehöhe, weist ein dementsprechendes Gehäuse Abschnitte unterschiedliche Höhe auf. Gemäß der Erfindung ist hier unter gleicher Höhe der Batteriezellen des Moduls gemeint, dass alle Batteriezellen des Moduls die gleiche höhenmäßige Abstufung, vorzugsweise auch mit gleicher Breite der Abstufung, aufweisen.

Gemäß der Erfindung sind ausgehend von normalen Batteriezellen, die auf ihren Grundflächen nebeneinander aufgestellt oder aufstellbar sind und jeweils ein prismatisches Zellengehäuse mit bevorzugter rechteckiger Grundfläche aufweisen, diese Grundflächen bei zumindest zwei der Batteriezellen unterschiedlich groß, wenn als die dritte variable Größe die Gehäusetiefe von Batteriezelle zu Batteriezelle variiert. Dagegen sind vordere und hintere, vorzugsweise senkrecht zur Grundfläche stehende Seitenflächen bei jeder Batteriezelle gleich groß. Vorzugsweise sind die drei genannten Maße Gehäusehöhe, Gehäusebreite und Gehäusetiefe die Volumen-bestimmenden Maße der Batteriezelle, das heißt, dass die Batteriezelle keine weiteren Volumenelemente als das eigentliche, prismatische Zellengehäuse aufweist. Die Batteriezellen sind in einem Paket angeordnet, wobei zwischen den Batteriezellen gegebenenfalls jeweils eine oder mehrere Zwischenschichten vorgesehen sein können. Diese Zwischenschichten sind jedoch im Verhältnis zu den Tiefen der Batteriezellen relativ dünn ausgeführt, so dass die im Paket angeordneten Batteriezellen ein kompaktes Modul ausbilden.

### Vorteile der Erfindung

Der Vorteil der Erfindung liegt insbesondere darin, dass auf Grund der Vereinheitlichung von wenigstens zwei geometrischen Maße der Batteriezelle die Möglichkeit der Vereinheitlichung von geometrischen Parametern der Umgebung des Batteriezellenmoduls bei seiner Anwendung, Lagerung, Handhabung, Transport und Montage besteht. Wenn zum Beispiel bei gleicher Gehäusehöhe und Gehäusebreite lediglich die Tiefe einzelner Batteriezellen des Batteriezellenmoduls variiert, sind somit auch zwei geometrische Maße des gesamten Batteriezellenmoduls, nämlich die Modulbreite und die Modulhöhe, fest vorgegeben. Variationen des Batteriezellenmoduls können lediglich noch in seiner Länge auftreten, die durch unterschiedliche Tiefen einzelner Batteriezellen bedingt sind. In besonderer Ausgestaltung können auch trotz unterschiedlicher Tiefen einzelner verwendeter Batteriezellen die daraus hergestellten Module gleiche Längen aufweisen. Durch die zuverlässige Einhaltung gleicher Modulbreiten und -höhen ist es möglich, Transport-, Lager-, Zuführ-, Positionierungs-, Fixierungs-, Wartungs-, Temperierungs- und Handhabungssysteme einheitlich einzustellen und gegebenenfalls lediglich in der Tiefe beziehungsweise der Länge variabel zu gestalten. Dadurch lassen sich Transport-, Lager-, Zuführ- und Handhabungssysteme einheitlich beziehungsweise einfacher gestalten. Die von den genannten Systemen durchzuführenden Prozesse sind berechenbarer. Temperierungs- oder Überwachungssysteme lassen sich mit geringerem Teileaufwand konzipieren. Durch die Vereinheitlichung von Maßen werden weiterhin Restriktionen geschaffen für weitere Batterieentwicklungen, die sich beschleunigend auf den Entwicklungsprozess von Batteriezellen beziehungsweise Batterien auswirken.

Vorzugsweise sind die gleichen Maße die Gehäusehöhe und Gehäusebreite und das wenigstens zwei Batteriezellen unterscheidende Maß ist die Gehäusetiefe. Die Gehäusetiefe ist somit bestimmend für den Volumenunterschied zwischen den jeweiligen Batteriezellen. Je größer die gewünschte Kapazität der Zelle ist, umso größer sollte die Batteriezellentiefe sein.

Vorzugsweise umfasst das erfindungsgemäße Batteriezellenmodul ein Paar von im Wesentlichen gleich großen Spannplatten, wobei jeweils eine Spannplatte an einer äußeren Gehäusewand einer äußeren Batteriezelle des Batteriezellenmoduls anliegt und eine Kraft auf diese Batteriezelle in Richtung der jeweils anderen Spannplatte ausübt. Die Spannkraft beziehungsweise Spannkräfte lassen sich mittels geeigneter Spanneinrichtungen, wie zum Beispiel Spannbolzen oder-gurten, gegebenenfalls unter Zuhilfenahme von Federelementen realisieren. Der Vorteil dieser Ausführungsform der Erfindung liegt darin, dass trotz Verwendung von unterschiedlichen Batteriezellen gleiche Spannplatten verwendet werden können.

Erfindungsgemäß ist vorgesehen, dass das Batteriezellenmodul wenigstens eine Kühlplatte aufweist, die an einer durch das Paket der Batteriezellen ausgebildeten Außenfläche anliegt. Diese gemeinsame Außenfläche wird durch die jeweiligen Außenflächen der einzelnen Batteriezellen ausgebildet, so zum Beispiel an der Unterseite des Paketes der Batteriezellen, so dass mehrere und bevorzugt alle Unterseiten der Batteriezellen die Kühlplatte kontaktieren. Auf Grund der gleichen Maße, zum Beispiel der gleichen Breite der Batteriezellen, lassen sich bevorzugt Kühlplatten einsetzen, die jeweils eine an diese Standardbreite angepasste Breite aufweisen. Lediglich die Längen der Kühlplatten können je nach Länge des jeweiligen Batteriezellenmoduls variieren. Es ist ersichtlich, dass zur Herstellung derart vereinheitlichter Kühlplatten ein geringerer Herstellungs- und Montageaufwand zu betreiben ist und einfachere oder weniger Fertigungsmittel einzusetzen sind.

Außerdem können Terminals der Batteriezellen eines jeweiligen Batteriezellenmoduls in ihren geometrischen Abmessungen im Wesentlichen gleich ausgestaltet sein. Vorzugsweise umfassen sie gleiche Formelemente wie zum Beispiel Anschlussmöglichkeiten in Form von Gewinden. Es kann zum Beispiel vorgesehen sein, dass alle Terminals mit einem Gewinde M8 ausgestattet sind. Unter dem Begriff der Terminals sind dabei die aus dem Batteriezellengehäuse herausragenden Batteriezellenpole zu verstehen, die elektrisch leitfähig mit den Wicklungen im Inneren der Batteriezelle verbunden sind. Der Vorteil dieser Ausgestaltung der Erfindung liegt in der Verringerung der Anzahl unterschiedlicher Typen von Zellverbindern sowie in einer vereinfachten Montage dieser Zellverbinder.

Die Erfindung betrifft außerdem eine Batterie, insbesondere eine Lithium-Ionen-Batterie, welche wenigstens ein erfindungsgemäßes Batteriezellenmodul umfasst. Je nach Leistungsanforderung kann eine Batterie eine Vielzahl derartiger erfindungsgemäßer Batteriezellenmodule aufweisen.

Eine solche Batterie kann dabei derart ausgestaltet sein, dass ein erstes Batteriezellenmodul wenigstens eine Batteriezelle umfasst, bei der das dritte Maß größer oder kleiner ist als das dritte Maß wenigstens einer Batteriezelle eines zweiten Batteriezellenmoduls, wobei die den Batteriezellenmodulen zugeordneten Kühlplatten im Wesentlichen die gleichen Abmaße und die gleiche geometrische Form haben. In einer Ausführungsvariante haben alle Batteriezellen eines Moduls dasselbe dritte Maß, das heißt, die Größe dieses Maßes ist bei allen Batteriezellen des Modulss gleich. Es können dabei unterschiedliche Anzahlen von Batteriezellen zu Modulen zusammengeschlossen sein, damit die Gesamtheit der Batteriezellen eines Moduls auf einer Kühlplatte mit im Wesentlichen gleichen Abmaßen wie die einem anderen Modul zugeordnete Kühlplatte angeordnet werden kann. Der Vorteil dieser Ausgestaltung liegt darin, dass trotz unterschiedlichem dritten Maß, zum Beispiel trotz unterschiedlicher Tiefe der einzelnen Batteriezellen in den einzelnen Modulen und unterschiedlicher Anzahl von Batteriezellen, gleiche Kühlplatten verwendet werden können.

In besonderer Ausführungsform der erfindungsgemäßen Batterie ist vorgesehen, dass die Batteriezellenmodule übereinander gestapelt angeordnet sind. Auf Grund gleicher Grundflächen-Abmaße sind sie besonders gut geeignet, gestapelt zu werden, insbesondere wenn die Batteriezellen derart zu Modulen zusammengefasst wurden, dass die Module trotz unterschiedlicher Tiefen der einzelnen Batteriezellen gleiche Längen haben. Bei gegebenenfalls unterschiedlichen Längen der Module kann eine versetzte Stapelung realisiert werden, welche jedoch zu einer verbesserten Festigkeit des Batteriezellenstapels führt. Das heißt, dass erfindungsgemäß die Batteriezellen ebenfalls in einem Baukastensystem und übereinander angeordnet zu einer Batterie angeordnet werden können.

Die Erfindung umfasst außerdem ein Kraftfahrzeug und insbesondere ein elektromotorisch antreibbares Kraftfahrzeug, welches wenigstens eine Batterie mit dem erfindungsgemäßen Batteriezellenmodul aufweist, wobei die Batterie mit einem Antriebssystem des Kraftfahrzeuges verbunden ist.

### Zeichnungen

Ausführungsbeispiele der Erfindung werden anhand der Zeichnungen und der nachfolgenden Beschreibung näher erläutert. Es zeigen:
Figur 1 ein Batteriezellenmodul in perspektivischer Ansicht,
Figur 2 zwei Batteriezellenmodule in Ansicht von oben,
Figur 3 ein Batteriezellenmodul in Ansicht von oben.

### Ausführungsformen der Erfindung

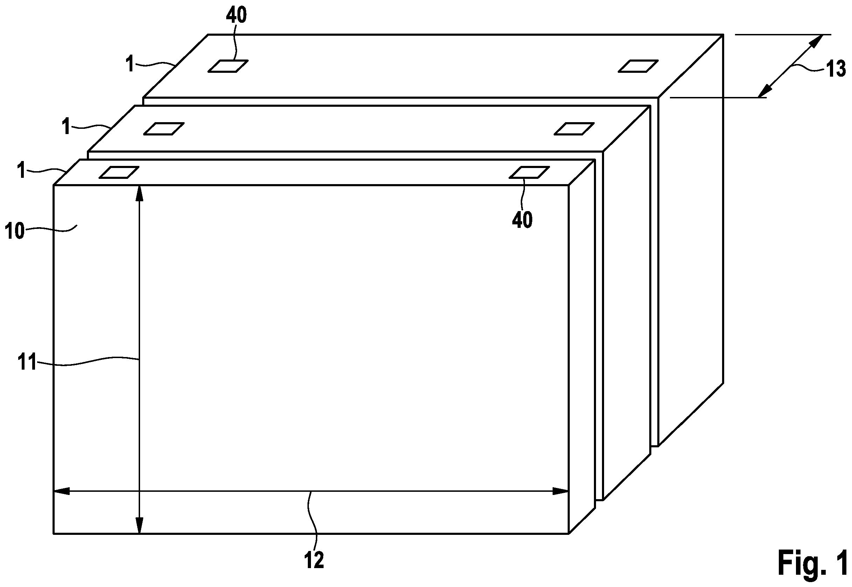

In Figur 1 ist der generelle Aufbau eines erfindungsgemäßen Batteriezellenmoduls ersichtlich. Es ist aus einzelnen Batteriezellen 1 zusammengesetzt. Jede Batteriezelle 1 weist ein Volumen definierendes Zellengehäuse 10 auf. Es ist deutlich erkennbar, dass die Batteriezellen 1 jeweils eine gleiche Gehäusehöhe 11 und Gehäusebreite 12 aufweisen.

Jede der dargestellten Batteriezellen weist jeweils eine unterschiedliche Gehäusetiefe 13 auf. Somit weist jede der dargestellten Batteriezellen 1 ein unterschiedliches Volumen auf. Trotz Verwendung von Batteriezellen 1 mit unterschiedlichen Volumen und demzufolge mit unterschiedlichen Kapazitäten lassen sich die Batteriezellen 1 wie in Figur 1 dargestellt anordnen, so dass sie zum Beispiel zusammen in einfacher Weise transportiert, gelagert oder montiert werden können. An den Oberseiten weisen die Batteriezellen 1 jeweils Terminals 40 auf. Diese sind vorzugsweise hinsichtlich ihrer geometrischen Abmaße und/oder Anschlussmöglichkeiten ebenfalls gleich ausgeführt, so dass gleichartige Verbinder zur Verbindung der Batteriezellen untereinander sowie zur Verbindung mit anderen Batterien eingesetzt werden können.

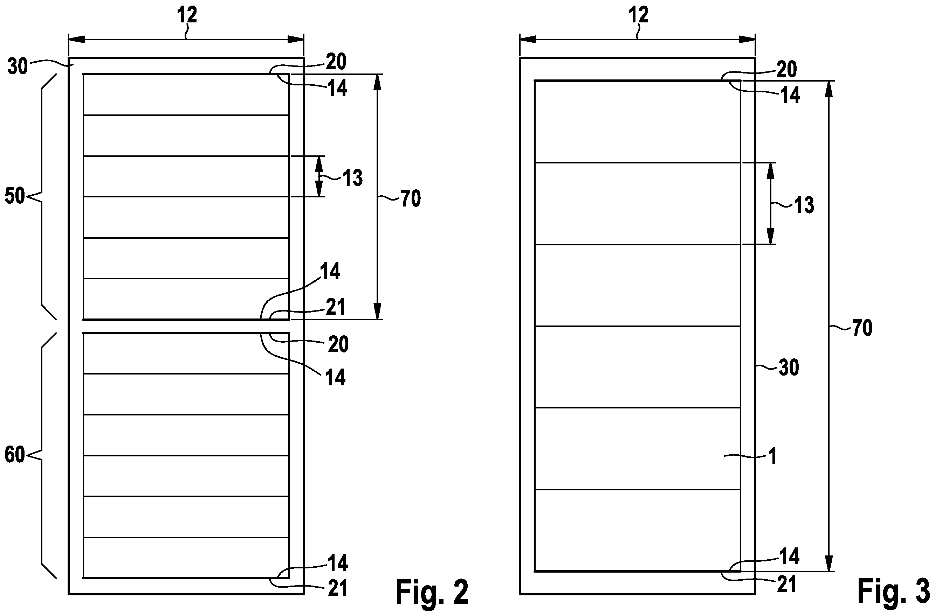

Die einzelnen, zu Paketen zusammengefassten Batteriezellen 1 können als Module auf Kühlplatten 30 aufgestellt und/oder von diesen abgedeckt werden. Wie in Figur 2 dargestellt ist, können zum Beispiel auf einer Kühlplatte 30 ein erstes Batteriezellenmodul 50 sowie ein zweites Batteriezellenmodul 60 angeordnet sein. Gemäß Figur 3 kann jedoch auch auf einer Kühlplatte 30 mit den gleichen geometrischen Abmaßen wie die Kühlplatte gemäß Figur 2 lediglich nur ein Batteriezellenmodul angeordnet sein. Auf Grund der geringeren Gehäusetiefe 13 der gemäß Figur 2 verwendeten Batteriezellen 1 lassen sich auf der Kühlplatte 30 doppelt so viel Batteriezellen anordnen wie auf der Kühlplatte 30 in Figur 3.

Die Erfindung ist jedoch nicht darauf eingeschränkt, dass auf einer längeren Kühlplatte 30 zwei Batteriezellenmodule 50, 60 anzuordnen sind, sondern es könnte auf dieser Kühlplatte 30 auch lediglich ein Batteriezellenmodul wie in Figur 3, jedoch mit der doppelten Anzahl von Batteriezellen 1 angeordnet sein.

Die jeweilige Modullänge 70 wird somit durch die unterschiedlichen Tiefen 13 der einzelnen Batteriezellen 1 sowie die Anzahl der je Modul angeordneten Batteriezellen 1 bestimmt.

Die in den Figuren 2 und 3 dargestellten Batteriezellen können, wie in Figur 1 dargestellt, unterschiedliche Gehäusetiefen 13 aufweisen, so dass es zu weiteren Variationen der Modullängen 70 kommen kann.

Vorteilhafterweise wird eine bestimmte Anzahl von Batteriezellen 1 in einem Batteriezellenmodul mittels einer ersten Spannplatte 20 und einer zweiten Spannplatte 21 zusammengehalten. Eine jeweilige Spannplatte 20, 21 liegt an der Gehäusewand jeweils einer äußeren Batteriezelle 14 an und wird mit geeigneten Spannmitteln jeweils in Richtung der anderen Spannplatte gezogen oder gedrückt. Auf Grund der Verwendung von Batteriezellen 1 mit gleicher Gehäusehöhe 11 und gleicher Gehäusebreite 12 lassen sich ebenfalls gleich große Spannplatten verwenden, so dass ein geringerer Aufwand hinsichtlich der Herstellung und Montage der Spannplatten notwendig ist.

## Patentansprüche

1. Batteriezellenmodul, umfassend eine Mehrzahl von Batteriezellen (1), insbesondere Lithium-Ionen-Batteriezellen, die
in einem Paket angeordnet sind und jeweils ein im Wesentlichen prismatisches Zellengehäuse (10) aufweisen, wobei
ein jeweiliges Zellengehäuse (10) die drei Maße Gehäusehöhe (11), Gehäusebreite (12) und Gehäusetiefe (13) aufweist, wobei
zwei der Maße bei allen Batteriezellen (1) des Batteriezellenmoduls im Wesentlichen gleich sind und das dritte Maß wenigstens bei zwei Batteriezellen (1) des Batteriezellenmoduls unterschiedlich ist, wobei
die Batteriezellen (1) in einer Längsrichtung des Batteriezellenmoduls nebeneinander angeordnet sind und das dritte Maß parallel zu der Längsrichtung ist, **dadurch gekennzeichnet, dass**
das Batteriezellenmodul wenigstens eine Kühlplatte (30) aufweist, die an einer durch das Paket der Batteriezellen ausgebildeten Außenfläche anliegt, die gemeinsam durch die jeweiligen Außenflächen der einzelnen Batteriezellen (1) ausgebildet ist, und
wobei die jeweiligen Außenflächen weiterhin parallel zu der Längsrichtung sind.

2. Batteriezellenmodul nach Anspruch 1, bei dem die gleichen Maße die Gehäusehöhe (11) und die Gehäusebreite (12) sind und das unterschiedliche Maß die Gehäusetiefe (13) ist.

3. Batteriezellenmodul nach wenigstens einem der Ansprüche 1 oder 2, welches ein Paar von im Wesentlichen gleich großen Spannplatten (20, 21) umfasst, wobei jeweils eine Spannplatte (20) an einer Gehäusewand (14) einer äußeren Batteriezelle des Batteriezellenmoduls anliegt und eine Kraft auf diese Batteriezelle (1) in Richtung der jeweils anderen Spannplatte (21) ausübt.

4. Batteriezellenmodul nach wenigstens einem der Ansprüche 1 bis 3, bei dem die Batteriezellen (1) Terminals (40) aufweisen, wobei die Terminals (40) der Batteriezellen (1) eines jeweiligen Batteriezellenmoduls in ihren geometrischen Abmessungen im Wesentlichen gleich ausgestaltet sind.

5. Batterie, umfassend wenigstens ein Batteriezellenmodul gemäß wenigstens einem der Ansprüche 1 bis 4.

6. Batterie nach Anspruch 5, welche mehrere Batteriezellenmodule gemäß Anspruch 4 aufweist, wobei ein erstes Batteriezellenmodul (50) wenigstens eine Batteriezelle (1) umfasst, bei der das dritte Maß größer oder kleiner ist als das dritte Maß wenigstens einer Batteriezelle (1) eines zweiten Batteriemoduls (60), und wobei die diesen Batteriezellenmodulen (50, 60) zugeordneten Kühlplatten (30) im Wesentlichen die gleichen Abmaße und die gleiche geometrische Form haben.

7. Batterie nach wenigstens einem der Ansprüche 5 oder 6, bei der Batteriezellenmodule übereinander gestapelt angeordnet sind.

8. Kraftfahrzeug, insbesondere elektromotorisch antreibbares Kraftfahrzeug, umfassend wenigstens eine Batterie gemäß wenigstens einem der Ansprüche 5 bis 7, wobei die Batterie mit einem Antriebssystem des Kraftfahrzeuges verbunden ist.

## Claims

1. Battery cell module, comprising a multiplicity of battery cells (1), in particular lithium-ion battery cells, which are arranged in a pack and which have in each case a substantially prismatic cell housing (10), wherein a respective cell housing (10) has the three dimensions housing height (11), housing width (12) and housing depth (13), wherein two of the dimensions are substantially identical for all of the battery cells (1) of the battery cell module, and the third dimension differs at least for two battery cells (1) of the battery cell module, wherein the battery cells (1) are arranged adjacent to one another in a longitudinal direction of the battery cell module, and the third dimension is parallel to the longitudinal direction, **characterized in that** the battery cell module has at least one cooling plate (30) which bears against an outer surface formed by the pack of battery cells, which outer surface is formed jointly by the respective outer surfaces of the individual battery cells (1), and wherein the respective outer surfaces are furthermore parallel to the longitudinal direction.

2. Battery cell module according to Claim 1, in which the identical dimensions are the housing height (11) and the housing width (12) and the different dimension is the housing depth (13).

3. Battery cell module according to at least one of Claims 1 and 2, which comprises a pair of clamping plates (20, 21) of substantially equal size, wherein in each case one clamping plate (20) bears against a housing wall (14) of an outer battery cell of the battery cell module and exerts a force on said battery cell (1) in the direction of the in each case other clamping plate (21).

4. Battery cell module according to at least one of Claims 1 to 3, in which the battery cells (1) have terminals (40), wherein the terminals (40) of the battery cells (1) of a respective battery cell module are of substantially identical configuration in terms of their geometric dimensions.

5. Battery comprising at least one battery cell module according to at least one of Claims 1 to 4.

6. Battery according to Claim 5, which has a plurality of battery cell modules according to Claim 4, wherein a first battery cell module (50) comprises at least one battery cell (1) for which the third dimension is larger or smaller than the third dimension of at least one battery cell (1) of a second battery cell module (60), and wherein the cooling plates (30) assigned to said battery cell modules (50, 60) have substantially the same dimensions and the same geometric shape.

7. Battery according to at least one of Claims 5 and 6, in which battery cell modules are arranged stacked one above the other.

8. Motor vehicle, in particular a motor vehicle which can be driven by electric motor, comprising at least one battery according to at least one of Claims 5 to 7, wherein the battery is connected to a drive system of the motor vehicle.

## Revendications

1. Module d'éléments de batterie, comprenant une pluralité d'éléments de batterie (1), en particulier des éléments de batterie lithium-ion qui sont disposés dans un bloc et présentent respectivement un boîtier d'élément substantiellement prismatique (10), dans lequel
un boîtier d'éléments (10) respectif présente les trois dimensions hauteur de boîtier (11), largeur de boîtier (12) et profondeur de boîtier (13), dans lequel
deux des dimensions sont substantiellement identiques pour tous les éléments de batterie (1) du module d'éléments de batterie et la troisième dimension est différente pour au moins deux éléments de batterie (1) du module d'éléments de batterie, dans lequel
les éléments de batterie (1) sont disposés les uns à côté des autres dans une direction longitudinale du module d'éléments de batterie, et la troisième dimension est parallèle à la direction longitudinale,
**caractérisé en ce que** le module d'éléments de batterie présente au moins une plaque de refroidissement (30) qui est adjacente à une surface extérieure réalisée par le bloc des éléments de batterie qui est réalisée conjointement par les surfaces extérieures respectives des différents éléments de batterie (1), et
dans lequel les surfaces extérieures sont de plus parallèles à la direction longitudinale.

2. Module d'éléments de batterie selon la revendication 1, dans lequel les dimensions identiques sont la hauteur de boîtier (11) et la largeur de boîtier (12) et la dimension différente est la profondeur de boîtier (13).

3. Module d'éléments de batterie selon au moins l'une des revendications 1 ou 2, comprenant une paire de plaques de serrage (20, 21) de taille substantiellement identique, dans lequel respectivement une plaque de serrage (20) est adjacente à une paroi de boîtier (14) d'un élément de batterie extérieur du module d'éléments de batterie et exerce une force sur cet élément de batterie (1) en direction de l'autre plaque de serrage (21) respectivement.

4. Module d'éléments de batterie selon au moins l'une des revendications 1 à 3, dans lequel les éléments de batterie (1) présentent des bornes (40), les bornes (40) des éléments de batterie (1) d'un module d'éléments de batterie respectif étant configurées substantiellement de manière identique au niveau de leurs dimensions géométriques.

5. Batterie, comprenant au moins un module d'éléments de batterie selon au moins l'une des revendications 1 à 4.

6. Batterie selon la revendication 5, présentant plusieurs modules d'éléments de batterie selon la revendication 4, dans laquelle un premier module d'éléments de batterie (50) comprend au moins un élément de batterie (1), dans laquelle la troisième dimension est supérieure ou inférieure à la troisième dimension d'au moins un élément de batterie (1) d'un deuxième module de batterie (60), et dans laquelle les plaques de refroidissement (30) associées à ces modules d'élément de batterie (50, 60) présentent substantiellement les mêmes dimensions et la même forme géométrique.

7. Batterie selon au moins l'une des revendications 5 ou 6, dans laquelle les modules d'éléments de batterie sont disposés en étant empilés les uns au-dessus des autres.

8. Véhicule automobile, en particulier véhicule automobile pouvant être entraîné par un moteur électrique, comprenant au moins une batterie selon au moins l'une des revendications 5 à 7, la batterie étant reliée à un système d'entraînement du véhicule automobile.
